# EUROPEAN PATENT APPLICATION

(11) **EP 3 666 640 A1**
(43) Date of publication of application: **17.06.2020**
(21) Application number: 18212654.0
(22) Date of filing: 14.12.2018
(51) Int. Cl.: B63J 4/00, C02F 1/38, C02F 1/46, B04C 5/26, B04C 5/00, B04C 5/04, B04C 9/00, C02F 103/08, C02F 1/74

(54) **WATER TREATMENT DEVICE**

(71) Applicant: ABB Schweiz AG, 5400 Baden (CH)
(72) Inventor: Dousset, Vincent, 5400 Baden (CH); Kassubek, Frank, 79618 Rheinfelden (DE); Garyfallos, Angelos, 5405 Baden (CH); Panousis, Emmanouil, 5405 Baden (CH)
(74) Representative: Zimmermann & Partner Patentanwälte mbB

(57) **Abstract**

A water treatment device 100 comprising a first hydrocyclone 102 and a biocidal fluid injector 120 is described. The first hydrocyclone 102 has an internal space 104, a water inlet 106 for supplying water into the internal space 104, a base outlet 108 for discharging at least a part of the water, and an apex outlet 112. The biocidal fluid injector 120 is configured to inject a biocidal fluid into the internal space 104 for eliminating organisms present in the water.

## Description

### Field of the disclosure

The present disclosure relates to a water treatment device including a hydrocyclone.

### Technical background:

Water treatment, particularly water disinfection, can include mixing the water with a biocidal fluid. The biocidal fluid can for example be a plasma effluent containing ozone, other radicals, or excited molecules.

To inject a biocidal fluid, particularly a plasma effluent, into a water stream, the water pressure and the pressure of the biocidal fluid have to be at least substantially matched. For example, the water pressure may have to be reduced to the pressure of the biocidal fluid. This can be done by use of a Venturi injector. In a Venturi injector, the biocidal fluid is injected into a constricted section of a pipe carrying the water.

Venturi injectors can be associated with requirements such as a modification of the piping layout and a use of non-standard piping parts. Venturi injectors can cause a pressure drop leading to higher pumping needs. A large footprint, elevated energy consumption, and high costs can ensue.

It is therefore an object of the present disclosure to overcome at least some of the above-mentioned problems in the prior art at least partially.

### Summary of the disclosure

In view of the above, a water treatment device according to claim 1 is provided. Furthermore, a ballast water system according to claim 12 and a water treatment method according to claim 14 are provided.

Further advantages, features, aspects and details that can be combined with embodiments described herein are evident from the dependent claims, claim combinations, the description and the drawings.

### Brief description of the Figures:

The details will be described in the following with reference to the figures, wherein
Fig. 1 is a schematic cross-sectional view of a water treatment device according to an embodiment of the disclosure; and
Fig. 2 is a schematic cross-sectional view of a water treatment device according to an embodiment of the disclosure.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

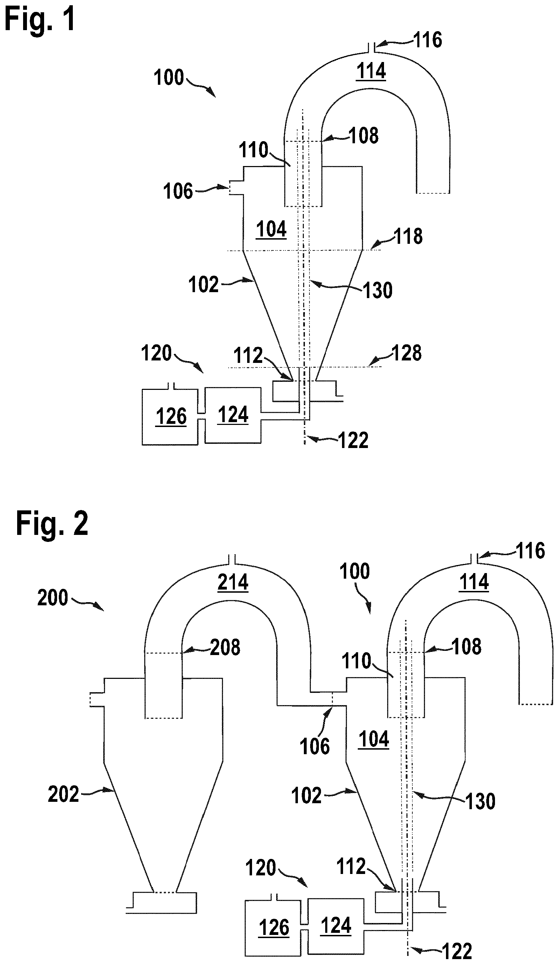

Fig. 1 is a schematic cross-sectional view of a water treatment device 100 according to an embodiment of the disclosure. The water treatment device 100 includes a first hydrocyclone 102. The first hydrocyclone 102 has an internal space 104 and a water inlet 106 for supplying water into the internal space 104. The first hydrocyclone 102 typically has a base outlet 108 for discharging at least a part of the water, and an apex outlet 112. The first hydrocyclone 102 may have a base outlet tube 110 extending into the internal space 104. A first opening of the base outlet tube 110 is particularly located within the internal space 104. The base outlet 108 of the first hydrocyclone 102 may be a second opening of the base outlet tube 110. The water treatment device 100 may include an outflow tube 114 connected to the base outlet 108. In a wall of the outflow tube 114, an opening connected to a breather tube 116 may be provided.

The first hydrocyclone 102 is typically configured such that a pressure gradient is created between the water inlet 106 and the base outlet 108 in operation of the water treatment device. The water pressure may be lower, for example by a factor of 2, 5, 10, or 15, in a region of the base outlet 108 than in a region of the water inlet 106. In the context of the present disclosure, the water treatment device being in operation may be understood as water being supplied into the internal space of the first hydrocyclone via the water inlet.

The first hydrocyclone 102 may be configured such that in operation of the water treatment system 100, a gas core 130 is created along a central axis 122 of the first hydrocyclone 102. The central axis 122 typically runs through the internal space 104 of the first hydrocyclone 102. In particular, the central axis 122 passes through the base outlet 108 and the apex outlet 112 of the first hydrocyclone 102. According to an aspect of the present disclosure, a certain minimal water pressure at the water inlet 106 may be beneficial for formation of a gas core 130. For example, the water treatment device 100 may be configured such that the water pressure at the water inlet 106 is higher than for example 0,2 bar, 0,5 bar, 1 bar or 2 bar.

The water supplied into the internal space of the hydrocyclone may include solids. The solids may include elements like for example particles and organisms. The elements may have a distribution of sizes. In particular, the volume per element may vary. The water treatment device may be configured such that elements having a volume larger than for example 25%, 50%, 100% or 150% of an average volume per element are discharged from the hydrocyclone via the apex outlet. In embodiments, elements having a dimension of more than for example 50 µm, 60µm or 75 µm may be discharged via the apex outlet. An element having a dimension is particularly to be understood as the element having the dimension in a main direction of extension of the element. In particular, large particles and/or organisms get filtered out of the water. More particularly, water discharged from the first hydrocyclone via the base outlet is typically at least substantially free of large particles and/or organisms.

In embodiments, the water treatment device may be configured such that at least for example 60%, 80% or 95% of the water supplied into the internal space 104 via the water inlet 106 is discharged via the base outlet 108 of the first hydrocyclone 102.

The water treatment device 100 further includes a biocidal fluid injector 120. The biocidal fluid injector 120 may be configured to inject a biocidal fluid into the internal space 104, particularly for eliminating organisms present in the water. In other words, the water may be disinfected via the biocidal fluid. The biocidal fluid particularly eliminates organisms which have not been filtered out of the water via the first hydrocyclone 102.

The water treatment device 100 may be configured to treat ballast water. The water inlet 106 may be configured to be connectable to a natural water reservoir or to a ballast tank such that water can be transferred from respectively the natural water reservoir or the ballast tank into the internal space 104. The water is particularly ballast water. In embodiments, the water inlet 106 may be configured to be connectable to any of a transport line and a water pump. Any of the transport line and the water pump may be configured to transfer water from respectively the natural water reservoir or the ballast water tank into the internal space 104.

In the context of the present disclosure, a natural water reservoir may for example be an ocean or a lake. A ballast water tank may be a ballast water tank of a ship, particularly of a seagoing vessel.

The base outlet 108 may be configured to be connectable to a ballast water tank or to a natural water reservoir such that water can be transferred from the internal space 104 respectively into the ballast water tank or to the natural water reservoir. In embodiments, the base outlet 108 may be configured to be connectable to any of a transport line and a water pump. Any of the transport line and the water pump may be configured to transfer water from the internal space respectively into the ballast water tank or to the natural water reservoir.

The biocidal fluid injector is particularly configured to inject the biocidal fluid along an injection axis. The injection axis may coincide with the central axis 122 of the first hydrocyclone 102. In embodiments, a distance between the injection axis and the central axis 122 may be smaller than for example 75%, 50% or 25% of a radius of the base outlet 108. The base outlet 108 is typically circular. Particularly in embodiments where the base outlet 108 is for example oval or rectangular, a radius of the base outlet 108 may be understood as being 50% of a maximum diameter of the base outlet 108. The maximum diameter is particularly to be measured in a direction perpendicular to the central axis 122.

In a region of the central axis 122 of the first hydrocyclone 102, the pressure is typically low, particularly lower than in other parts of the internal space 104 of the hydrocyclone. Injecting the biocidal fluid in a region where the pressure is low particularly has the advantage that the pressure of the biocidal fluid may be low.

In embodiments, the biocidal fluid injector may be positioned such that a pressure of the injected biocidal fluid, particularly a pressure within the injected biocidal fluid, is lower than the head pressure of the first hydrocyclone.

The biocidal fluid injector 120 may be configured to inject the biocidal fluid in a direction parallel to a central axis 122 of the first hydrocyclone 102. A transport of the biocidal fluid toward the base outlet 108 of the first hydrocyclone 102 may particularly be facilitated.

The biocidal fluid injector 120 may be configured to inject the biocidal fluid via the apex outlet 112. The first hydrocyclone 102 typically has a tapered section extending in a direction of the central axis 122. The tapered section may extend from a starting plane 118 to the apex outlet 112. The biocidal fluid injector 120 may be configured to inject the biocidal fluid in an injection plane 128.

The distance between the injection plane 128 and a center of the apex outlet 112 is typically smaller than the distance between the starting plane 118 and a center of the apex outlet 112. In embodiments, the distance between the injection plane 128 and a center of the apex outlet 112 may be smaller than for example 80%, 50%, 20% or 10% of the distance between the starting plane 118 and a center of the apex outlet 112. The injection plane 112 being close to the apex outlet 112 particularly has the advantage that the biocidal fluid can be injected in a region where the pressure is low. Injecting a low pressure biocidal fluid may be facilitated.

In embodiments, the water treatment device 100 may be configured such that a pressure in the internal space 104 along the injection axis, and particularly in the injection plane 128 or in proximity to the injection plane 128, is lower than the pressure of the biocidal fluid to be injected by the biocidal fluid injector 120. The biocidal fluid may be sucked into the internal space 104 and particularly flow toward the base outlet 108 of the first hydrocyclone 102.

According to an aspect of the present disclosure, the water treatment device 100 may be configured such that in operation of the water treatment device, an annular flow is created. The annular flow includes water supplied into the internal space 104 via the water inlet 106. The water particularly flows along walls of the first hydrocyclone 102 through the base outlet 108. More particularly, the water flows through the base outlet 108 into the outflow tube 114. The annular flow further includes a gas core 130. The gas core 130 may include biocidal fluid flowing from the injection plane 128 toward the base outlet 108 of the first hydrocyclone 102.

The annular flow including the gas core 130 may flow into the outflow tube 114, particularly via the base outlet tube 110.

According to an aspect of the present disclosure, the water treatment device is configured such that in operation of the water treatment device, the annular flow transitions to a dispersed flow. In the context of the present disclosure, a dispersed flow may be understood as gas from the gas core being dispersed in the water. Dispersed flow is particularly to be understood as bubbly flow. In particular, bubbles of gas from the gas core are dispersed in the water. The transition from annular flow to dispersed flow may occur for example in any of the base outlet tube and the outflow tube. In embodiments, the transition may occur in the internal space of the first hydrocyclone.

Dispersion of gas from the gas core in the water particularly leads to mixing of biocidal fluid present in the gas core with the water. Reaction of the biocidal fluid with the water and particularly with organisms present in the water is facilitated. In particular, the water is disinfected.

The biocidal fluid injector 120 may include a production unit 124 configured to produce the biocidal fluid. The biocidal fluid injector 120 may include a pump 126 connected to the production unit 124. The pump 126 is particularly configured to provide an overpressure for the injection of the biocidal fluid into the internal space 104. The pump 126 may be connected upstream of the production unit 124. Connecting the pump 126 upstream of the production unit 124 particularly has the advantage that the biocidal fluid does not have to flow through the pump 126. Damage to the pump may be avoided.

A connection path for transport of the biocidal fluid between the production unit 124 and the internal space 104 may be devoid of any pumps. A short connection path between the production unit 124 and the internal space 104 of the first hydrocyclone 102 may be ensured. In particular, it may be ensured that the biocidal fluid gets into contact with the water before the reactivity, particularly the effectiveness, of the biocidal fluid is lost. Particularly in this regard, the effectiveness of the biocidal fluid is to be understood as the ability of the biocidal fluid to eliminate organisms.

The production unit 124 may be a plasma generator. The biocidal fluid may include a plasma effluent. The biocidal fluid may particularly be a plasma effluent. The plasma effluent may include ozone, other radicals, and/or excited molecules. The biocidal fluid is particularly gaseous. The plasma generator may be configured to produce the plasma effluent by generating a plasma in a feed gas. Generating the plasma may include inducing a plasma discharge, in particular a cold plasma discharge. Particularly a cold plasma discharge is associated with an efficient production of oxidizing agents. The plasma generator may have a feed gas inlet. The pump 126 is particularly connected to the feed gas inlet. A typical feed gas includes oxygen. In embodiments, the water treatment device 100 is configured to use air, particularly dried air, as a feed gas.

The voltage to ignite and preserve a plasma discharge depends on the pressure of the gas in a region where the plasma discharge takes place. A lower gas pressure is associated with a lower voltage required for a discharge to occur and thus with a lower energy input. A plasma created in a low pressure gas typically produces a low pressure plasma effluent. Injecting a plasma effluent into a first hydrocyclone in a low pressure region of the hydrocyclone particularly has the advantage that a low pressure plasma effluent may be injected. A utilization of a plasma generator configured for energy-efficient plasma creation may be made possible.

The water treatment device particularly has the advantage that filtration and disinfection of the water are combined in one device. The total pressure drop of the water before and after filtration and disinfection may be particularly low. The biocidal fluid can in particular be mixed with the water without an additional pressure drop. The use of a Venturi injector for mixing the biocidal fluid with the water can be omitted. A modification of existing piping layout may be avoided. Generally, drawbacks associated with Venturi injectors may be mitigated or avoided. Drawbacks associated with Venturi injectors may include a required use of non-standard piping parts and increased pumping needs due to a pressure drop. The water treatment device as described herein particularly has a small footprint. The water treatment device may be associated with lower energy consumption and with reduced costs.

The small foot print of the water treatment device as described herein is particularly advantageous in the case of ballast water treatment. Space savings are particularly valuable on ships. For retrofitting a ship, a small footprint of the water treatment device is particularly beneficial.

Fig. 2 is a schematic cross-sectional view of a water treatment device 200 according to an embodiment of the disclosure. Compared to the embodiment shown in Fig. 1, the water treatment device 200 includes a second hydrocyclone 202. A base outlet 208 of the second hydrocyclone 202 may be connected to the water inlet 106 of the first hydrocyclone 102. In embodiments, the base outlet 208 of the second hydrocyclone may be connected to the water inlet 106 of the first hydrocyclone 102 via an outflow tube 214 of the second hydrocyclone 202.

The second hydrocyclone 202 may have an internal space and a water inlet. The second hydrocyclone 202 may be configured to filter water supplied into the internal space via the water inlet. The second hydrocyclone may be configured to filter large particles and/or organisms out of the water, particularly analogously as disclosed regarding the first hydrocyclone in the description of Fig. 1. In particular, water discharged from the second hydrocyclone via the base outlet is typically at least substantially free of large particles and/or organisms.

The filtration and the disinfection of the water may be at least partly separated. The first hydrocyclone 102 may be provided with water pre-filtered by the second hydrocyclone 202. The water treatment device 200 is typically configured such that a biocidal fluid is injected into the internal space 104 of the first hydrocyclone 102, as detailed in the description of Fig. 1. In embodiments, the first hydrocyclone 102 of the water treatment device 202 may provide an additional filtering of the water. The first hydrocyclone 102 may particularly filter water supplied into the internal space 104 via the water inlet 106 as disclosed in the description of Fig. 1.

The present disclosure further relates to a ballast water system. The ballast water system typically includes a ballast water tank. The ballast water system further includes a water treatment device according to aspects described herein. The ballast water system particularly includes a water treatment device 100 as described with regard to Fig.1 or a water treatment device 200 as described with regard to Fig. 2. The ballast water tank may be connected to the water treatment device 100, 200 so as to allow for a transfer of water in at least one direction.

In embodiments, the ballast water system may be configured such that at least for example 65%, 80% or 90% of the water supplied into the internal space 104 via the water inlet 106 is discharged via the base outlet 108 of the first hydrocyclone 102.

The present disclosure further relates to a water treatment method. The water treatment method includes feeding water into a water treatment device according to aspects described herein. The water treatment method particularly includes feeding water into a water treatment device 100 as described with regard to Fig. 1 or into a water treatment device 200 as described with regard to Fig. 2.

## Claims

1. Water treatment device (100, 200) comprising a first hydrocyclone (102) and a biocidal fluid injector (120);
the hydrocyclone having an internal space (104), a water inlet (106) for supplying water into the internal space (104), a base outlet (108) for discharging at least a part of the water, and an apex outlet (112); and
the biocidal fluid injector (120) being configured to inject a biocidal fluid into the internal space (104) for eliminating organisms present in the water.

2. Water treatment device according to claim 1, wherein the biocidal fluid injector (120) is configured to inject the biocidal fluid in a region of a central axis (122) of the first hydrocyclone (102).

3. Water treatment device according to any of the preceding claims, wherein the biocidal fluid injector (120) is configured to inject the biocidal fluid in a direction parallel to a central axis (122) of the first hydrocyclone (102).

4. Water treatment device according to any of the preceding claims, wherein the biocidal fluid injector (120) is configured to inject the biocidal fluid via the apex outlet (112).

5. Water treatment device according to any of the preceding claims, the biocidal fluid injector (120) comprising a production unit (124) configured to produce the biocidal fluid.

6. Water treatment device according to claim 5, the biocidal fluid injector (120) further comprising a pump (126) connected to the production unit (124), the pump being configured to provide an overpressure for the injection of the biocidal fluid into the internal space (104).

7. Water treatment device according to claim 6, the pump (126) being connected upstream of the production unit (124).

8. Water treatment device according to any of claims 5 to 7, a connection path for transport of the biocidal fluid between the production unit (124) and the internal space (104) being devoid of any pumps.

9. Water treatment device according to any of claims 5 to 8, wherein the production unit (124) is a plasma generator.

10. Water treatment device according to claim 9, wherein the biocidal fluid comprises a plasma effluent and wherein the plasma generator is configured to produce the plasma effluent by generating a plasma in a feed gas.

11. Water treatment device according to any of the preceding claims, further comprising a second hydrocyclone (202) for filtering particles and/or organisms out of the water;
a base outlet (208) of the second hydrocyclone (202) being connected to the water inlet (106) of the first hydrocyclone (102).

12. Ballast water system comprising a ballast water tank and a water treatment device (100, 200) according to any of the preceding claims, the ballast water tank being connected to the water treatment device so as to allow for a transfer of water in at least one direction.

13. Ballast water system according to claim 12, configured such that at least 80% of the water supplied into the internal space (104) via the water inlet (106) is discharged via the base outlet (108) of the first hydrocyclone (102).

14. Water treatment method comprising: feeding water into a water treatment device (100) according to any of claims 1 to 11.
